# EUROPEAN PATENT SPECIFICATION

(11) **EP 1 645 969 B1**
(45) Date of publication and mention of the grant of the patent: **27.02.2008**
(21) Application number: 04104953.7
(22) Date of filing: 08.10.2004
(51) Int. Cl.: G06F 13/38

(54) **Remote configuration management for data processing units**
Fernkonfigurationsmanagement eines Datanverarbeitungssystems
Configuration à distance d'un système de traitement de données

(43) Date of publication of application: 12.04.2006
(73) Proprietor: Agilent Technologies, Inc., Santa Clara, CA 95051 (US)
(72) Inventor: Klein, Frank Agilent Technologies Deutschland GmbH, 71034, Böblingen (DE); Metzger, Michael Agilent Technologies Deutschland GmbH, 71034, Böblingen (DE)
(74) Representative: Barth, Daniel Mathias

(56) References cited:
- EP-A- 1 235 156
- WO-A-02/15517
- US-A- 6 101 557

## Description

### BACKGROUND ART

The present invention relates to a remote data configuration management of data processing units.

Remote management of data processing units allows management and monitoring of a data processing unit from remote. Current management systems allow visualization and management of data on a remote display of the local data processing unit. For that purpose, the remote management unit is coupled over a data bus (such as a PCI or an Universal Serial Bus (USB) bus) to the data processing unit. Remote management of a data processing unit is e.g. described in EP 1235156 and EP 1168154 of the same applicant.

Each data processing unit (DPU) has its specific configuration data, e.g. hardware configuration data, boot configuration data, OS (operating system) configuration data (e.g. Windows Registry) and application configuration data. The configuration data is vital for a proper operating of the unit. This data is typically stored on the hard disk of the unit, in a system memory local to that unit, or on a remote server in a network. This data is often additionally stored on a separate offline medium (compact disk etc.) to be used in cases where, e.g. in a case of a failure of the data processing unit, the hard disk is not accessible at all. In cases of failures, where vital data on the local data processing unit is either lost, or corrupted, or cannot be accessed from the hard disk for any reasons, this data has to be re-loaded to the data processing unit, i.e. the data processing unit or at least one application of the data processing unit needs to be reconfigured.

### DISCLOSURE OF THE INVENTION

It is an object of the invention to provide a simple remote configuration management. The object is solved by the independent claims. Preferred embodiments are shown by the dependent claims.

According to the present invention, a remote management unit (RMU) is provided with a memory local to the RMU (local memory) for storing the configuration data of a local data processing unit (DPU), e.g. a network server, connected to the RMU. The RMU is connected over a data network with a remote client or control unit and further to a data bus of the DPU. In a case that the local data processing unit needs to be provided with configuration data, e.g. in cases of rebooting after a crash, the RMU accesses configuration data from the local memory and transmits the configuration data to the DPU over the data bus.

An advantage of the present invention is that an installation or configuration on a local computer can be managed without either manually loading configuration data from an offline medium (e.g. floppy disk or compact disk) on location or involving an online medium (remote backup server) over the network. Managing a plurality of computers of a network can be carried out without the need to manage at the remote side a plurality of corresponding specific configuration data.

In an embodiment, priorto the transmission of configuration data to the DPU, the RMU receives a corresponding request from the remote control unit.

In a further embodiment, the RMU initiates a booting of the DPU based on the transmitted configuration data after a successful completion of the configuration data transmission.

In a further embodiment, the RMU eventually sends a report to the remote control unit comprising information that the configuration data was successfully transmitted or that problems were encountered (e.g. that the booting process failed).

In a further embodiment, the remote control unit executes the steps of receiving state information about the DPU over the network, carrying out an analysis on said state information, and generating the request to be transmitted to the RMU, wherein the content of the request depends on a result of the analysis.

It is not always necessary to download the whole configuration data after a computer crash or for a computer update. In those cases it is sufficient to modify certain configuration items of the DPU in order to achieve the desired configuration Therefore, in a further embodiment, DPU state information comprises information about defects or deviations from a desired configuration. The request to perform such changes might comprise a list of specific configuration data files that should be loaded into the DPU to update the state of the DPU.

In a further embodiment, the request comprises an indication about a desired configuration. The RMU identifies the files that are still not stored or shall replace existing files in the DPU. If one or more of those files are actually not stored in the local memory, the RMU might contact remote control unit or a further resource requesting to download this data into the RMU. Those files are downloaded together with other requested files from local memory to the DPU.

In a further embodiment, the DPU transmits actual configuration data during operation to the RMU to be stored in the local memory, especially in situations, when problems have been encountered, i.e. just before or during a crash (e.g. Windows blue screen data or Core Dump data). This data is analyzed either in the remote client or directly in the RMU (in this case an analysis result is transmitted to the emote client). Depending on the analysis result, the remote client sends a request the RMU identifying that data (e.g. in a form of a list of files) that have to be downloaded to the data processing unit.

In a further embodiment, the request from remote control unit comprises an information about a time point at which the configuration data is to be transmitted to the DPU Therewith it is possible to avoid any reconfiguration of the DPU in busy time periods. This is especially advantageous in distributed environments with a lot of DPU's that need to be updated synchronously at a certain point of time, e.g. in a bank environment for a distribution of financial data (price tables or interest rate tables), for user account management or for security access control.

Preferably, the RMU comprises a switch for connecting or disconnecting the RMU from the data bus. This switch is preferably actuated such that the RMU is connected to the data bus only during transmission of data from the local memory to the DPU. This is especially advantageous in systems, wherein the DPU is located in a non-secure environment with public access either directly via a user interface (e.g. Automated Teller Machines, classroom applications, information terminals) or indirectly over a public data network (e.g. information servers). The switch allows keeping the RMU secured, so that the configuration data stored in the local memory cannot be accessed from the DPU.

The invention can be partly or entirely embodied or supported by one or more suitable software programs, which can be stored on or otherwise provided by any kind of data carrier, and which might be executed in or by any suitable data processing unit, preferably in a control unit of the RMU.

### BRIEF DESCRIPTION OF DRAWING

Other objects and many of the attendant advantages of embodiments of the present invention will be readily appreciated and become better understood by reference to the following more detailed description of preferred embodiments in connection with the accompanied drawings.

Fig. 1 shows an embodiment of a remote management system with an exemplary block architecture, and

Fig. 2 shows an alternative embodiment of RMU.

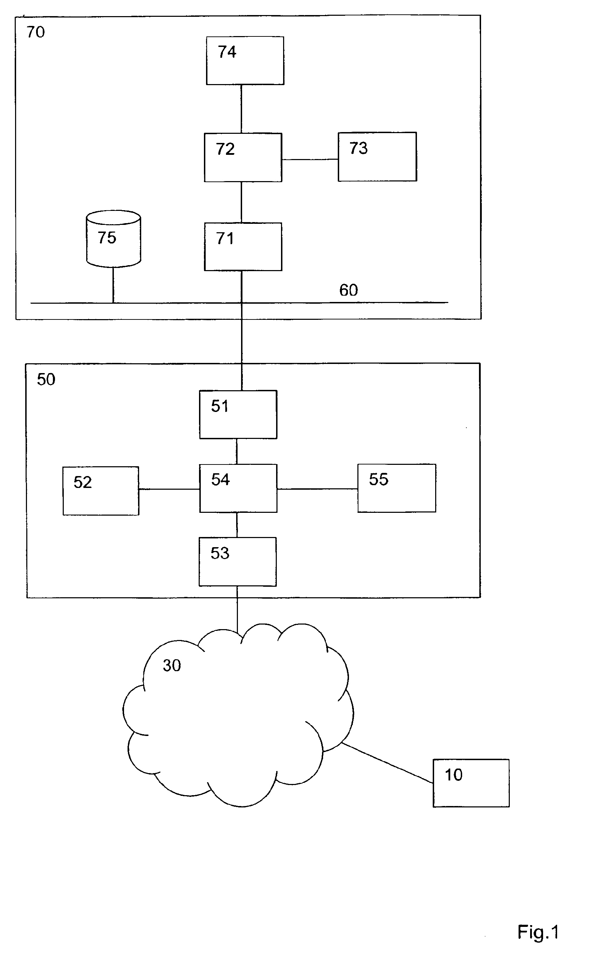

Fig. 1 shows a local data processing unit (DPU) 70 connected over a data bus connection 60 to a remote management unit (RMU) 50. RMU 50 is further connected over an external network 30 to a remote control unit or remote client 10.

DPU 70 comprises an Input output (I/O) unit or I/O bridge 71, a memory bridge 72, a CPU 74, a DPU random access memory or DPU system memory 73 and a permanent memory or hard disk 75. Hard disk 75 and I/O bridge 71 are both connected to a data bus 60. Memory bridge 72 is connected to I/O bridge 71. Further, both CPU 74 and DPU system memory 73 are connected to memory bridge 72.

RMU 50 comprises a local memory 52 an RMU switch 51, a network interface 53, a CPU 54 and an RMU system memory 55. CPU 54 is connected to RMU switch 51, network interface 53, local memory 52 and RMU system memory 55.

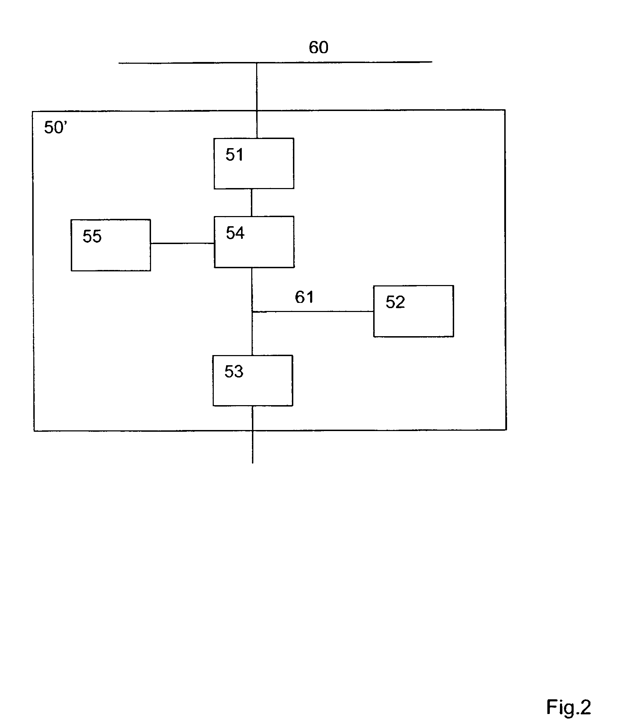

Fig. 2 shows an alternative RMU 50' similarly to RMU 50 of Fig.1 comprising a local memory 52 an RMU switch 51, a network interface 53, a CPU 54 and an RMU system memory 55. CPU 54 is connected to RMU switch 51 and RMU system memory 55. Differently to Fig.1, alternative RMU 50' comprises an internal RMU data bus 61 that connects CPU 54, local memory 52 and network interface 53 to each other.

In a further alternative not shown, RMU data bus 61 is directly connected to RMU switch 51. In this case, RMU switch 61 directly connects data bus 60 and RMU data bus 61 to each other.

Data bus 60 can be realized as parallel bus (e.g. PCI bus). It can be alternatively realized as serial bus (e.g. USB bus) that is terminated by serial bus terminals on both RMU side and DPU side carrying out serial/parallel conversions.

It is understood that DPU 70 and RMU 50 might comprise further units not shown here, e.g. graphical user interfaces. It is further understood that the block diagram of Fig.1 and Fig.2 represents only two exemplary architectures among a plurality of possible architectures.

Actual configuration data of DPU 70 is stored in hard disk 75. During normal start of DPU 70 or of a software application on DPU 70, the corresponding configuration data is loaded into DPU system memory 73. The configuration data might e.g. comprise hardware configuration data, boot configuration data, operating configuration data (e.g. windows registry), application configuration data, address information (network addresses), access information (access rights), personal preferences and settings, or any parameters that are not generic to the application.

In a case of a so-called computer or server crash, DPU 70 is not able to continue the present application (application crash) or to work at all (operation system crash). The reason for such a crash might be any data corruption due to hardware failures or electro-magnetic disturbances from external devices. In many of those cases, DPU 70 cannot be restarted (rebooted), because vital data is affected by such a crash. In this case, the original configuration must be restored. Therefore, affected configuration data has to be downloaded into DPU 70.

In such a case, remote control unit 10 might get an error report over external data network, either from the DPU 70 itself or from RMU 50. Depending on this report, data files are determined that have to be downloaded to DPU 70. Remote control unit 10 returns a request to RMU 50 comprising an identification of those files to be downloaded. RMU 50 now accesses these files and transmits them over data bus 60 to hard disk 75 of DPU 70.

In an embodiment of the invention, RMU 50 initiates a booting of DPU 70 and further transmits a report to remote control unit 10 about whether the reconfiguration of DPU 70 was successfully completed or not.

It is also possible that DPU 70 needs a configuration update, e.g. a virus update. In this case, remote control unit 10 sends a corresponding request to RMU 50. The corresponding virus update files can be downloaded from remote control unit 10 to RMU 50. It is also possible, that the request comprises a network address of an update server not shown in Fig.1. RMU 50 then establishes a connection to this download server over network 30 and downloads actual update files.

The request from remote control unit 10 might further comprise an indication to download the update files at a determined date and time.

The connection between RMU 50 and DPU 70 is preferably a high-speed data bus connection, e.g. realized as PCI or USB bus. Further, interfaces or busses like the so-called FireWire or Serial ATA can be used.

The network connection between remote client 10 and the RMU 50 can be a connection over any public and/or private data network, e.g. the Internet over public telephone access lines (e.g. DSL, ISDN or analogue telephone termination and a corresponding Modem). Such a connection is relatively slow and insecure. Configuration data might comprise sensitive data like personal data, passwords etc. The invention has the advantage that a (re-) configuration of DPU 70 can be initiated and controlled from remote over a public network 30 without providing sensitive data over this network; i.e. by only exchanging control data of said network. Sensitive data is only exchanged over the secure private data bus between DPU 70 and RMU 50.

Local memory 52 might be realized as removable hardware unit physically located within or outside RMU 50 (e.g. in form of a memory stick (e.g. a Compact Flash, or USB stick) removably connected to RMU 50) or integrated (fixed wired) on any board of the RMU.

DPU 70 can be any personal computer or network server. Especially for managing remote network servers, the invention can be advantageously applied. Reconfiguration management can be completely carried out from remote without any management of the reconfiguration files. No emergency disks must be kept and no remote database must be provided for storing all the different configuration files of the servers that are managed from remote control unit 10.

RMU 50 can be realized as hardware unit located outside the housing of DPU 70. Alternatively, RMU 50 can be realized as separate hardware unit (e.g. an electronic board) integrated into the housing of DPU 70.

It is to be understood that Fig. 1 illustrates a logical representation with an assignment of features to either unit based on a logical separation of RMU functionalities and server functionalities. However, this does not necessarily mean or require physical separation of individual hardware or software components.

## Claims

1. A method for managing a local data processing unit - DPU - (70) from remote by a remote control unit (10), wherein a remote management unit - RMU - (50) is coupled to the remote control unit (10) by means of a network (30) external with respect to the DPU (70), and the RMU (50) is coupled with the DPU (70) through a data bus (60), and wherein the RMU (50) executes the following steps:
- storing configuration data in a memory (52) local to the RMU (50),
- accessing configuration data from said memory (52) and
- transmitting the configuration data to the DPU (70) over the data bus (60),
**characterized in, that**
the RMU (50) receives a request from the remote control unit (10) comprising information to provide configuration data stored in the local memory (52) to the DPU (70),
wherein the remote control unit (10) receives state information about the DPU (70) over the network (30), carries out an analysis on said state information, and the request transmitted to the RMU (50) comprising information to provide configuration data stored in the local memory (52) to the DPU (70), wherein the content of the request depends on a result of the analysis.

2. The method of claim 1, wherein the RMU (50) initiates a booting of the DPU (70) based on the transmitted configuration data.

3. The method of claim 1 or any one of the above claims, wherein the RMU (50) sends a report to the remote control unit (10) comprising information that the configuration data was successfully transmitted.

4. The method of claim 1, wherein the state information comprises information about defects or deviations from a desired configuration, wherein the request comprises an identification of specific configuration data files to be sent the DPU (70) so that after booting the DPU (70) based on the specific configuration data files sent the DPU (70) has the desired configuration.

5. The method of claim 4, wherein, if one or more of the specific data files are not stored in the local memory (52), the RMU (50) contacts a further resource to download this data into the local memory (52).

6. The method of claim 1, or any one of the above claims, wherein the request comprises an information about a time point at which the configuration data is to be transmitted to the DPU (70).

7. The method of claim 1, or any one of the above claims, wherein the RMU comprises a switch (51) for connecting or disconnecting the RMU (50) to the data bus (60).

8. The method of claim 7, wherein the switch (51) is controlled such that the RMU 50) is connected only during selected time periods to the DPU (70).

9. A remote management unit - RMU - (50) for managing a local data processing unit - DPU - (70) from remote by a remote control unit (10), comprising:
- an interface adapted to connect the RMU to a data bus (60) of the DPU,
- at least one of: a local memory (52) or an interface to a local memory (52) adapted to be connected to the data bus (60),
- a control unit (54) adapted to control a transfer of configuration data from the local memory (52) to the data bus (60), and
- an interface adapted to connect the RMU (50) over an external network (30) to a remote control unit (10),
**characterized in, that**
the RMU (50) is adapted for receiving a request from the remote control unit (10) comprising information to provide configuration data stored in the local memory (52) to the DPU (70), wherein the content of the request depends on a result of the analysis carried out by the remote control unit (10) in response to state information about the DPU (70) received over the external network (30).

10. The remote management system (1) of claim 9, further comprising a switch (51) adapted to provide a switchable connection between the local memory (52) and the data bus (60).

11. A software program or product, preferably stored on a data carrier, for executing the method of claim 1 or any one of the above method claims, when executed in a control unit (54) of the remote management unit (50).

## Patentansprüche

1. Verfahren zur Fernverwaltung einer lokalen Datenverarbeitungseinheit - DPU (Data Processing Unit) - (70) durch eine ferne Steuereinheit (10), wobei bei dem Verfahren eine ferne Verwaltungseinheit - RMU (Remote Management Unit) - (50) unter Verwendung eines Netzes (30) außerhalb der DPU (70) mit der fernen Steuereinheit (10) und die RMU (50) über einen Datenbus (60) mit der DPU (70) verbunden ist und die RMU (50) die folgenden Schritte ausführt:
- Speichern von Konfigurationsdaten in einem lokalen Speicher (52) der RMU (50),
- Zugreifen auf die Konfigurationsdaten im Speicher (52), und
- Übertragen der Konfigurationsdaten über den Datenbus (60) an die DPU (70),
**dadurch gekennzeichnet, dass**
die RMU (50) eine Anforderung von der fernen Steuereinheit (10) empfängt, welche eine Information zum Bereitstellen der im lokalen Speicher (52) gespeicherten Konfigurationsdaten an die DPU (70) aufweist,
wobei die ferne Steuereinheit (10) eine Statusinformation über die DPU (70) über das Netz (30) empfängt und eine Analyse der Statusinformation durchführt, wobei die an die RMU (50) übertragene Anforderung eine Information zum Bereitstellen der im lokalen Speicher (52) gespeicherten Konfigurationsdaten für die DPU (70) aufweist und der Inhalt der Anforderung von einem Ergebnis der Analyse abhängt.

2. Verfahren nach Anspruch 1, bei dem die RMU (50) auf der Grundlage der übertragenen Konfigurationsdaten einen Bootprozess der DPU (70) startet.

3. Verfahren nach Anspruch 1 oder einem der obigen Ansprüche, bei dem die RMU (50) einen Bericht an die ferne Steuereinheit (10) sendet, der eine Information darüber aufweist, dass die Konfigurationsdaten erfolgreich übertragen wurden.

4. Verfahren nach Anspruch 1, bei dem die Statusinformation eine Information über Fehler oder Abweichungen von einer gewünschten Konfiguration aufweist und die Anforderung eine Kennung spezieller an die DPU (70) zu sendender Konfigurationsdatendateien aufweist, sodass nach dem Hochfahren (Booten) der DPU (70) auf der Grundlage der gesendeten speziellen Konfigurationsdatendateien die DPU (70) die gewünschte Konfiguration aufweist.

5. Verfahren nach Anspruch 4, bei dem die RMU (50) mit einer weiteren Ressource in Verbindung tritt, wenn eine oder mehrere der speziellen Datendateien nicht im lokalen Speicher (52) gespeichert sind, um diese Daten in den lokalen Speicher (52) zu laden.

6. Verfahren nach Anspruch 1 oder einem der obigen Ansprüche, bei dem die Anforderung eine Information über einen Zeitpunkt aufweist, zu welchem die Konfigurationsdaten an die DPU (70) übertragen werden sollen.

7. Verfahren nach Anspruch 1 oder einem der obigen Ansprüche, bei dem die RMU einen Schalter (51) aufweist, um die RMU (50) mit dem Datenbus (60) zu verbinden oder wieder von ihm zu trennen.

8. Verfahren nach Anspruch 7, bei dem der Schalter (51) so gesteuert wird, dass die RMU (50) nur während ausgewählter Zeiträume mit der DPU (70) verbunden ist.

9. Ferne Verwaltungseinheit - RMU - (50) zur Fernverwaltung einer lokalen Datenverarbeitungseinheit - DPU - (70) durch eine ferne Steuereinheit (10), die Folgendes aufweist:
- eine Schnittstelle, die so beschaffen ist, dass sie die RMU mit einem Datenbus (60) der DPU verbindet,
- mindestens einen lokalen Speicher (52) oder eine Schnittstelle für einen lokalen Speicher (52), die mit dem Datenbus (60) verbunden werden kann,
- eine Steuereinheit (54), die so beschaffen ist, dass sie eine Übertragung von Konfigurationsdaten vom lokalen Speicher (52) zum Datenbus (60) steuert, und
- eine Schnittstelle zum Verbinden der RMU (50) über ein externes Netz (30) mit einer fernen Steuereinheit (10),
**dadurch gekennzeichnet, dass**
die RMU (50) so beschaffen ist, dass sie eine Anforderung von der fernen Steuereinheit (10) empfängt, die eine Information zum Bereitstellen im lokalen Speicher (52) gespeicherter Konfigurationsdaten für die DPU (70) aufweist, wobei der Inhalt der Anforderung von einem Ergebnis der Analyse abhängt, die durch die ferne Steuereinheit (10) als Reaktion auf die über das externe Netz (30) empfangene Statusinformation über die DPU (70) ausgeführt wurde.

10. Fernverwaltungssystem (1) nach Anspruch 9, das ferner einen Schalter (51) aufweist, der eine schaltbare Verbindung zwischen dem lokalen Speicher (52) und dem Datenbus (60) herstellen kann.

11. Softwareprogramm oder -produkt, das vorzugsweise auf einem Datenträger gespeichert ist, zum Ausführen des Verfahrens nach Anspruch 1 oder einem der obigen Ansprüche des Verfahrens, wenn das Verfahren in einer Steuereinheit (54) der fernen Verwaltungseinheit (50) ausgeführt wird.

## Revendications

1. Procédé permettant de gérer à distance une unité de traitement de données - DPU - locale (70) par une télécommande (10), dans lequel une unité de gestion à distance - RMU - (50) est couplée à la télécommande (10) au moyen d'un réseau (30) externe à la DPU (70), et la RMU (50) est couplée à la DPU (70) par l'intermédiaire d'un bus de données (60), et dans lequel la RMU (50) exécute les étapes suivantes :
- le stockage de données de configuration dans une mémoire (52) locale dans la RMU (50) ;
- l'accès à des données de configuration dans ladite mémoire (52), et
- la transmission des données de configuration à la DPU (70) par le bus de données (60),
**caractérisé en ce que**
la RMU (50) reçoit une demande provenant de la télécommande (10) comprenant des informations pour fournir à la DPU (70) des données de configuration stockées dans la mémoire locale (52) ;
dans lequel la télécommande (10) reçoit des informations d'état à propos de la DPU (70) par le réseau (30), effectue une analyse sur lesdites informations d'état, et la demande transmise à la RMU (50) comprenant des informations pour fournir des données de configuration stockées dans la mémoire locale (52) à la DPU (70), dans lequel le contenu de la demande dépend d'un résultat de l'analyse.

2. Procédé suivant la revendication 1, dans lequel la RMU (50) initie un amorçage de la DPU (70) sur la base des données de configuration transmises.

3. Procédé suivant la revendication 1 ou suivant l'une quelconque des revendications précédentes, dans lequel la RMU (50) envoie un rapport à la télécommande (10) comprenant des informations selon lesquelles les données de configuration ont été transmises avec succès.

4. Procédé suivant la revendication 1, dans lequel les informations d'état comprennent des informations à propos de défauts ou d'écarts par rapport à une configuration souhaitée, dans lequel la demande comprend une identification de fichiers de données de configuration spécifiques à envoyer à la DPU (70) de sorte qu'après amorçage de la DPU (70) sur la base des fichiers de données de configuration spécifiques envoyés, la DPU (70) présente la configuration souhaitée.

5. Procédé suivant la revendication 4, dans lequel, si un ou plusieurs des fichiers de données spécifiques ne sont pas stockés dans la mémoire locale (52), la RMU (50) contacte une autre ressource pour télécharger ces données dans la mémoire locale (52).

6. Procédé suivant la revendication 1 ou suivant l'une quelconque des revendications précédentes, dans lequel la demande comprend une information à propos d'un point dans le temps auquel les données de configuration vont être transmises à la DPU (70).

7. Procédé suivant la revendication 1 ou suivant l'une quelconque des revendications précédentes, dans lequel la RMU comprend un commutateur (51) pour connecter la RMU (50) au bus de données (60) ou la déconnecter de celui-ci.

8. Procédé suivant la revendication 7, dans lequel le commutateur (51) est commandé de sorte que la RMU (50) n'est connectée à la DPU (70) que pendant des périodes de temps déterminées.

9. Unité de gestion à distance - RMU - (50) pour gérer à distance une unité de traitement de données - DPU - locale (70) par une télécommande (10), comprenant :
- une interface à même de connecter la RMU à un bus de données (60) de la DPU ;
- au moins une parmi : une mémoire locale (52) ou une interface avec une mémoire locale (52) à même d'être connectée au bus de données (60) ;
- une unité de commande (54) à même de commander un transfert de données de configuration de la mémoire locale (52) vers le bus de données (60), et
- une interface à même de connecter la RMU (50) par un réseau externe (30) à la télécommande (10);
**caractérisée en ce que**
la RMU (50) est à même de recevoir une demande provenant de la télécommande (10) comprenant des informations pour fournir à la DPU (70) des données de configuration stockées dans la mémoire locale (52), dans lequel le contenu de la demande dépend d'un résultat de l'analyse effectuée par la télécommande (10) en réponse à des informations d'état à propos de la DPU (70) reçues par le réseau externe (30).

10. Système de gestion à distance (1) suivant la revendication 9, comprenant en outre un commutateur (51) à même de fournir une connexion commutable entre la mémoire locale (52) et le bus de données (60).

11. Programme ou produit logiciel, de préférence stocké sur un support de données, pour exécuter le procédé suivant la revendication 1 ou suivant l'une quelconque des revendications précédentes, lorsqu'il est exécuté dans une unité de commande (54) de l'unité de gestion à distance (50).
